# EUROPEAN PATENT SPECIFICATION

(11) **EP 1 497 367 B1**
(45) Date of publication and mention of the grant of the patent: **10.01.2007**
(21) Application number: 02734928.1
(22) Date of filing: 27.06.2002
(51) Int. Cl.: C08L 29/04, C08L 31/04, C08J 7/12, B65D 65/46

(54) **POLYMER COMPOSITION AND A METHOD FOR PRODUCING PACKING MATERIALS WITH CONTROLLABLE DECOMPOSITION**
POLYMER-MISCHUNGEN UND VERFAHREN ZUR HERSTELLUNG VON VERPACKUNGSMATERIALIEN MIT STEUERBARER ZERSETZUNG
COMPOSITION POLYMERE ET PROCEDE DE PRODUCTION DE MATIERES D'EMBALLAGE A DECOMPOSITION REGLABLE

(30) Priority: 17.12.2001 BG 10622501
(43) Date of publication of application: 19.01.2005
(73) Proprietor: Georgiev, Ivan Vasilev, 5000 Veliko Tarnovo (BG); Angelov, Krasimir Ivanov, 9002 Varna (BG)
(72) Inventor: Georgiev, Ivan Vasilev, 5000 Veliko Tarnovo (BG); Angelov, Krasimir Ivanov, 9002 Varna (BG)
(74) Representative: Christova, Iskra Vladimirova
(86) International application number: PCT/BG2002/000015
(87) International publication number: WO 2003/051989

(56) References cited:
- EP-A- 0 284 334
- WO-A-91/02025
- US-A- 5 272 191
- PATENT ABSTRACTS OF JAPAN vol. 013, no. 278 (C-611), 26 June 1989 (1989-06-26) & JP 01 074201 A (KURARAY CO LTD), 20 March 1989 (1989-03-20)

## Description

### Field of the Invention

The invention relates to a polymer composition for packing materials which are used for the packing of chemicals, foods and other products. The invention relates also to a method for producing packing materials with controllable decomposition in water medium.

### Background of the Invention

Contemporary packing materials based on polymers contain mostly thermoplastic polymers and co-polymers such as polyethylene, polypropylene, polystyrene, polyethyleneterephtalat, polyamide etc.

It is known that packing materials are made of modified polyvinyl alcohol, polyvinylalcohol/polyvinylacetate, carboxymethylcellulose, methylcellulose, dextrines, wheat starch, potato starch.

PCT/US98/24166, WO 99/25762 published on 27.05.1999 discloses a packing material, which contains (in % by weight): wheat starch from 70 to 95, hydrolyzed polyvinylalcohol from 9 to 14, vegetable oil from 0.7 to 2.0, non-organic components (titanium dioxide etc.) from 0.1 to 0.4, dextrines from 3 to 5, and water from 6.0 to 8.5.

The disadvantages of this known composition are: In case of natural decomposition, there are conditions for acidic and decay processes. The composition has a restricted field of application as it can be used only for flat and not for volumetric packages.

EP 0 079 248, published on 18.05.1983, discloses a packing material for detergents, which is a combination of a water-soluble film based on polyvinylalcohol and polytetrafluoroethylen powder. This material has restricted application. Besides, its disintegration in washing water solution is fixed to a short period - up to 1 or 2 minutes.

EP 0 884 352, published on 16.12.1998, describes a material consisting of a water-soluble film, which contains 100 parts polyvinylalcohol modified by sulphonic acid and 0.05 to 20 parts gallic acid or C₁₋₅ alkilester. This material is used for producing packages for agricultural chemicals, acid-containing substances, and chlorine-containing chemicals, as well as for the production of fibers and non-fiber articles. The composition cannot be used for packing foods. Moreover, after decomposition in water medium, acidic and decay processes occur. The decomposition period in water medium is short - from 14 to 158 seconds.

PCT/JP93/01114, WO 94/04656 published on 03.03.1994 discloses a water-soluble packing film for detergents based on polyvinylalcohol modified by itaconic acid with a restricted application of polymers, monomers and co-polymers, containing a carboxy group.

This known packing material has a restricted application (for detergents packing) and a fixed short period of decomposition in water medium - from 30 to 50 seconds.

### Summary of the Invention

The aim of the invention is to provide a physiologically harmless packing material with a wide range of application and controllable decomposition of the packages in water medium, ensuring environmental friendliness and recycling of the material.

The polymer composition for packing materials with controllable decomposition contains polyvinylalcohol and water and, according to the invention, also contains polyvinylacetate dispersion, methylcellulose, carboxymethyl celullose and glucose in the following proportions (in % by weight): polyvinylalcohol 32 - 84; polyvinylacetate dispersion 10 - 57; methylcellulose 3.0 - 5.8; carboxymethylcelullose 2.0 - 4.2; glucose 0.5 - 2.3, and water 0.5 - 6.0.

The polyvinylalcohol has a degree of polymerization from 1200 to 2000. It does not decompose into monomers upon hydrolysis and does not decompose under the influence of bacteria. It is physiologically harmless, which permits the use of the packages in the food industry and for medical purposes.

The polyvinylacetate dispersion, contained in the polymer composition, according to the invention, has the following characteristics: dry residue 48 - 56 %; molecular mass from 14 000 to 32 000; apparent viscosity 50 - 200 mN.s/m².
Polyvinylacetate is harmless to the human organism, even if the water is removed from it. In case of forced orientation, the tensile strength of the material increases up to 9 - 10 MPa.

The methylcellulose gives the polymer composition, according to the invention, greater resistance to decay and microorganisms. Depending on the degree of esterification (metoxyl number 23 - 57), this component influences the regulation of package decomposition in water medium.

The method for obtaining packing materials with controllable decomposition in water medium from a polymer composition includes the preparation of a dry mixture or viscous mass and moulding. According to the invention, before and after the moulding the material is treated successively with aqueous sodium tetraborate solution and aqueous formaldehyde solution.

The content of sodium tetraborate in the water solution is from 5 to 20 % by weight.

The content of formaldehyde in the water solution is from 5 to 40 % by weight.

The duration of treatment with the solutions is from 5 to 900 seconds.

One embodiment of the method according to the invention is that after treating the material with formaldehyde solution it is treated again with sodium tetraborate solution.

A preferred embodiment of the method consists of successive treatment of the material with aqueous sodium tetraborate solution of concentration between 8 and 15 % by weight; aqueous formaldehyde solution of concentration from 20 to 35 % by weight, and aqueous sodium tetraborate solution of concentration from 15 to 20 % by weight.

The package decomposition control is achieved by varying the concentration of sodium tetraborate and formaldehyde in the functional solutions and the treatment period. For decomposition control purposes, the period of treatment with functional solutions also depends on the temperature at which the moulding of packing films and hollow articles is done. At temperatures between 70°C and 190°C, the period of treatment is increased.

Known methods are used for preparation of the dry mixture or viscous mass, and for the material moulding. The water content in the viscous mass is from 25 to 40% by weight of the dry mixture.

The dry mixture is prepared in a mixer with a stirrer at a pre-set temperature, pressure, humidity and process time, the components of the polymer composition being added in a specified order. The resulting dry mixture is cooled and packed.

The viscous mass is prepared in a mixer with a stirrer at a pre-set temperature and process time, the components of the polymer composition being added to a defined quantity of demineralized water in a specified order. After cooling, the viscous mass is packed in suitable containers. The viscous mass is processed in rollers and calenders.

When the moulding is performed by rolling of the polymer composition at temperatures between 70° C and 100° C, the period of package decomposition in water medium is shorter - up to 24 hours.

When the moulding is performed by extrusion of the polymer composition, temperatures are set between 140° C and 190° C, whereupon the decomposition period in water medium is regulated from 168 hours up to 6 months.

The polymer composition, according to the invention, can be recycled by recovering it from water solutions at temperatures up to 60° C by means of bonding with complex solutions to form agglomerate and subsequent blowing with purified warm air at a temperature of 60 - 70 °C in tunnel driers.

The advantages of the polymer composition, according to the invention, are the following: The packages made from this material meet the requirements for ecological cleanness. They decompose in water medium. Upon contact with oils, acids, bases and other chemically active substances, the polymer composition does not enter into exchange reactions. The packages made from the polymer composition have controllable durability in liquids containing water, within a period from 3 hours up to 6 months. They are physiologically harmless and their application is unrestricted concerning the type of the packed raw materials and substances - chemicals, foods and other products. The ready-made packages from the polymer composition are in a state of functional use, and even after natural or forced decomposition, their pH remains within the limits of 6.8 - 7.2.

### Examples

**Example 1.** A dry mixture was prepared from the following components (in % by weight): polyvinylalcohol - 82, polyvinylacetate dispersion - 10, methylcellulose - 3, carboxymethylcellulose -2, glucose - 1.2 and demineralized water - 1.8.
The polymerization degree of polyvinylalcohol was 1400.
The dry mixture was used to prepare a viscous mass by adding of 20-25 % by weight water and the mass was subjected to rolling at temperatures from 70° to 100° C.
The resulting polymer film was treated with functional solutions as follows:
a/ treatment with 5 % solution of sodium tetraborate for 3 - 5 seconds;
b/ treatment with 10 % solution of formaldehyde for 5 - 10 seconds;
c/treatment with 10 % solution of sodium tetraborate for 10-15 seconds.

After every treatment with functional solutions, the polymer film was washed with demineralized water at a temperature of 20° -25° C.
The polymer film of width between 0.01 and 0.04 mm was used to produce disposable packages suitable for storage in dry conditions. After usage, the packages are dissolved completely in cold water within 2 - 3 hours.

**Example 2.** A dry mixture was prepared from the following components (in % by weight) polyvinylalcohol - 70, polyvinylacetate dispersion - 19, methylcellulose - 4, carboxymethylcellulose - 3, glucose - 1.4, and demineralized water - 2.6.
The polymerization degree of polyvinylalcohol was 1200.
The dry mixture was subjected to rolling at temperatures from 80° to 110° C.
The resulting polymer film was treated with functional solutions as follows:
a/ treatment with 5 % solution of sodium tetraborate for 15 - 20 seconds;
b/ treatment with 20 % solution of formaldehyde for 30 -35 seconds;
c/ treatment with 15 % solution of sodium tetraborate for 60 -75 seconds.

After every treatment with functional solutions, the polymer film was washed with demineralized water at a temperature of 20° -25°C.
From the polymer film of width between 1.2 and 2.1 mm, by vacuum moulding, disposable packages were produced - cups, plates, mats etc. They had 24 hours durability in liquids containing water. After usage, the packages were dissolved gradually in water medium and complete decomposition was achieved within 72 - 80 hours.

**Example 3.** A dry mixture was prepared from the following components (in % by weight): polyvinylalcohol - 65, polyvinylacetate dispersion - 21, methylcellulose - 4.2, carboxymethylcellulose - 3.6, glucose - 2.2, and demineralized water - 4.0.
The polymerization degree of polyvinylalcohol was 1300.
The dry mixture was subjected to extrusion at temperatures in °C in the different zones of heating as follows: 150, 155, 160, 152, 163 and 167.
The resulting polymer film was treated with functional solutions as follows:
a/ treatment with 5 % solution of sodium tetraborate for 18 - 25 seconds;
b/ treatment with 20 % solution of formaldehyde for 60 -75 seconds.

The packages had 48 hours durability in liquids containing water. After usage, the packages were dissolved gradually in water medium and complete decomposition was achieved within 56 - 100 hours.

**Example 4**. A dry mixture was prepared from the following components (in % by weight): polyvinylalcohol - 60, polyvinylacetate dispersion - 26, methylcellulose - 3.9, carboxylmethylcellulose - 3.9, glucose - 2.3, and demineralized water - 3.9.
The polymerization degree of polyvinylalcohol was 1400.
The dry mixture was subjected to extrusion at temperatures in °C in the different zones of heating as follows: 150, 155, 162, 155, 165 and 170.
The resulting polymer film was treated with functional solutions as follows:
a/ treatment with 10 % solution of sodium tetraborate for 30 - 35 seconds;
b/ treatment with 20 % solution of formaldehyde for 75 -85 seconds.

The packages had 72 hours durability in liquids containing water. After usage, the packages were dissolved gradually in water media and complete decomposition was achieved within 168 hours.

**Example 5.** A dry mixture was prepared from the following components (in % by weight): polyvinylalcohol - 55, polyvinylacetate dispersion - 32, methylcellulose - 4.6, carboxymethylcellulose - 4.0, glucose - 2.3, and demineralized water - 2.1.
The polymerization degree of polyvinylalcohol was 1500.
The dry mixture was subjected to extrusion at temperatures in °C in the different zones of heating as follows: 155, 160, 165, 158, 165 and 170.
The resulting polymer film was treated with functional solutions as follows:
a/ treatment with 10 % solution of sodium tetraborate for 50 - 60 seconds;
b/ treatment with 22 % solution of formaldehyde for 115-120 seconds.

The packages had 168 hours durability in liquids containing water. After usage, the packages were dissolved gradually in water medium and complete decomposition was achieved within 190 - 200 hours.

**Example 6.** A dry mixture was prepared from the following components (in % by weight): polyvinylalcohol - 48, polyvinylacetate dispersion - 37, methylcellulose - 4.7, carboxymethylcellulose - 4.1, glucose - 2.3, and demineralized water - 3.9.
The polymerization degree of polyvinylalcohol was 1600.

The dry mixture is subjected to extrusion at temperatures in °C in the different zones of heating as follows: 155, 160, 165, 155, 170 and 172.
The resulting polymer film was treated with functional solutions as follows:
a/ treatment with 15 % solution of sodium tetraborate for 90 - 110 seconds;
b/ treatment with 25 % solution of formaldehyde for 120-140 seconds;
c/ treatment with 20 % solution of sodium tetraborate for 30-45 seconds.

The packages had two weeks durability in liquids containing water. After usage, the packages were dissolved gradually in water medium and complete decomposition was achieved within three weeks.

**Example 7.** A dry mixture was prepared from the following components (in % by weight): polyvinylalcohol - 43, polyvinylacetate dispersion - 42, methylcellulose - 4.9, carboxymethylcellulose - 4.1, glucose - 2.3, and demineralized water - 3.7.
The polymerization degree of polyvinylalcohol was 1600.
The dry mixture is subjected to extrusion at temperatures in °C in the different zones of heating as follows: 160, 165, 168, 160, 175 and 175 .
The resulting polymer film was treated with functional solutions as follows:
a/ treatment with 15 % solution of sodium tetraborate for 120-130 seconds;
b/ treatment with 30 % solution of formaldehyde for 190-200 seconds.

The packages had one month durability in liquids containing water. After usage, the packages were dissolved gradually in water medium and complete decomposition was achieved within 45 days.

**Example 8.** A dry mixture was prepared with the following components (in % by weight): polyvinylalcohol - 55, polyvinylacetate dispersion - 32, methylcellulose - 4.6, carboxymethylcellulose - 4.0, glucose - 2.3, and demineralized water - 2.1.
The polymerization degree of polyvinylalcohol was 1600.
The dry mixture was subjected to extrusion at temperatures in °C in the different zones of heating as follows; 155, 160, 165, 158, 165 and 170.
The obtained polymer film was treated with functional solutions as follows:
a) treatment with 15 % solution of sodium tetraborate for 150 - 180 seconds;
b) treatment with 30 % solution of formaldehyde for 240-250 seconds;
c) treatment with 20 % solution of sodium tetraborate for 120-150 seconds.

The packages had two months durability in liquids containing water. After usage, the packages were dissolved gradually in water medium and complete decomposition was achieved within 75 days.

**Example 9.** A dry mixture was prepared from the following components (in % by weight): polyvinylalcohol - 35, polyvinylacetate dispersion - 49, methylcellulose - 5.5, carboxymethylcellulose - 4.2, glucose - 2.3, and demineralized water - 4.0.
The polymerization degree of polyvinylalcohol was 1900.
The resulting dry mixture was treated with functional solutions as follows:
a/ treatment with 10 % solution of sodium tetraborate for 60 - 120 seconds;
b/ treatment with 28 % solution of formaldehyde for 50-60 seconds;
c/ treatment with 20 % solution of sodium tetraborate for 180 - 220 seconds.

After every treatment with functional solutions, the polymer material was washed with demineralized water at a temperature of 20° -25°C and dried at a temperature of 85° -90°C.

The dry mixture treated with functional solutions was subjected to extrusion at temperatures in °C in the different zones of heating as follows: 165, 170, 180, 175, 185 and 185.

The resulting polymer material was processed in blast automatic machines to produce bottles, vials and other 3-d packages used for storing products with shelf life up to 3 months. After this period the packages are decomposed gradually in water medium and complete decomposition is achieved within 120 days.

**Example 10.** A dry mixture was prepared from the following components (in % by weight): polyvinylalcohol - 30, polyvinylacetate dispersion - 52, methylcellulose - 5.8, carboxymethylcellulose - 4.2, glucose - 2.3, and demineralized water - 5.7.
The polymerization degree of polyvinylalcohol was 2000.
The resulting polymer film was treated with functional solutions as follows:
a) treatment with 20 % solution of sodium tetraborate for 150 - 180 seconds;
b) treatment with 40 % solution of formaldehyde for 180 - 200 seconds;
c) treatment with 20 % solution of sodium tetraborate for 860 - 900 seconds.

After every treatment with functional solutions, the dry mixture was washed with demineralized water at a temperature of 20 - 25 °C and dried at a temperature of 85 - 90 °C.

The dry mixture, thus obtained was then subjected to extrusion at temperatures in °C in the different zones of heating as follows: 170, 175, 180, 170, 185 and 190.
The resulting polymer material was processed in blast automatic machines to produce bottles, vials and tubes, used for storing products with shelf life up to 6 months.
After this period the packages are decomposed gradually in water media and complete decomposition is achieved within 6 - 7 months.

Table 1 shows the physical and mechanical characteristics (average values) of the polymer composition according to the invention and known materials, used for packages.

**Table 1**

| Material | Tensile strength kg/cm² | Relative elongation, % (Elongation per unit length %) | Impact strength, kg/m2 | Strength of static load, kg/cm2 | Heat resistance acc. to Martens in °C |
|---|---|---|---|---|---|
| PC | 560-170 | 200 - 1400 | Not destroyed | 800-1000 | 90-120 |
| PEHD | 180-350 | 100-1000 | Not destroyed | - | 70-80 |
| PELD | 80-230 | 300-1000 | Not destroyed | - | 60-75 |
| PP | 210-370 | 20-800 | Not destroyed | 200-400 | 100 |
| PVC | 500-750 | 10-50 | - | 1000-2000 | 65-85 |
| PS | 260-380 | 25-60 | 10-80 | 360 | 50-70 |
| PETPH | 470 | 50-300 | Not destroyed | - | 110 |

| | | | | | |
|---|---|---|---|---|---|
| PC - polymer composition according to the invention HDPE - high density polyethylene LDPE - low density polyethylene PP- polypropylene PVC - polyvinyl chloride hard PS - polystyrene PETPH - polyethyleneterephtalate | | | | | |

## Claims

1. Polymer composition for producing packing materials with controllable decomposition in water medium containing polyvinylalcohol and water, **characterized in that** it also contains polyvinylacetate dispersion, methylcellulose, carboxymethylcellulose and glucose in the following proportions of the components in % by weight:
polyvinylalcohol 32 - 84, polyvinylacetate dispersion 10- 57, methylcellulose 3.0 - 5.8, carboxymethylcellulose 2.0 - 4.2, glucose 0.5 - 2.3, and water 0.5 - 6.0.

2. A polymer composition, according to claim 1, **characterized in that** the polyvinylalcohol degree of polymerization is between 1200 and 2000.

3. A method for producing packing materials from the polymer composition according to claim 1, including the preparation of a dry mixture or viscose mass and moulding, **characterized in that** before or after the moulding the material is treated successively with aqueous sodium tetraborate and aqueous formaldehyde solution.

4. A method, according to claim 3, **characterized in that** the content of sodium tetraborate in the aqueous solution is between 5 and 20 % by weight.

5. A method, according to claim 3, **characterized in that** the content of the formaldehyde in the aqueous solution is between 5 and 40 % by weight.

6. A method, according to claim 3, **characterized in that** the time of treatment with the solutions is between 5 and 900 seconds.

7. A method, according to claim 3, **characterized in that** after treating the material with formaldehyde solution, it is treated again with sodium tetraborate solution.

8. A method, according to claims 3 and 7, **characterized in that** the moulded material is treated successively with aqueous sodium tetraborate solution of concentration from 8 to 15 % by weight, aqueous formaldehyde solution of concentration from 20 to 35 % by weight, and aqueous sodium tetraborate solution of concentration from 15 to 20 % by weight.

9. A method, according to claim 3, **characterized in that** the moulding of the polymer composition by rolling is carried out at temperatures from 70° to 100°C, which ensure a shorter period of decomposition in water medium up to 24 hours.

10. A method, according to claim 3, **characterized in that** the extrusion of the polymer composition is carried out at temperatures between 140° and 190°C, ensuring controlled decomposition time in water medium within a period from 168 hours up to 6 months.

## Patentansprüche

1. Polymerkomposition zur Herstellung von Verpackungsmaterial mit regelbarer Auflösung im wässrigen Medium, bestehend aus Polyvinylalkohol und Wasser, **dadurch gekennzeichnet, daß** sie ebenso Polyvinylazetatdispersion, Methylzellulose, Karboxymethylzellulose und Glukose bei folgendem Verhältnis der Komponenten in Gewichtsprozent enthält: Polyvinylalkohol, 32 - 84, Polyvinylazetatdispersion 10-57, Methylzellulose 3.0-5.8, Karboxymethylzellulose 2.0 - 4.2, Glukose 0.5 - 2.3 und Wasser 0.5 -6.0.

2. Polymerkomposition nach Anspruch 1, **dadurch gekennzeichnet, daß** der Polyvinylalkohol einen Polymerisationsgrad von 1200 bis 2000 hat.

3. Verfahren zur Herstellung von Verpackungsmaterial aus Polymerkomposition mit regelbarer Auflösung im wässrigen Medium, das Zubereitung von Trockengemisch oder viskoser Masse sowie Formen einschließt, **dadurch gekennzeichnet, daß** das Material vor oder nach dem Formen nacheinander mit Wasserlösung des Natriumtetraborats und Wasserlösung des Formaldehyds behandelt wird.

4. Verfahren nach Anspruch 3, **dadurch gekennzeichnet, daß** das Natriumtetraboratsgehalt in der Wasserlösung von 5 bis 20 Gewichtsprozente beträgt.

5. Verfahren nach Anspruch 3, **dadurch gekennzeichnet, daß** das Formaldehydgehalt in der Wasserlösung von 5 bis 40 Gewichtsprozent beträgt.

6. Verfahren nach Anspruch 3, **dadurch gekennzeichnet, daß** die Zeit zur Behandlung mit den Lösungen von 5 bis 900 s beträgt.

7. Verfahren nach Anspruch 3, **dadurch gekennzeichnet, daß** nach der Meterialbehandlung mit Formaldehydlösung das Material noch einmal mit Natriumtetraboratlösung behandelt wird.

8. Verfahren nach Ansprüchen 3 und 7, **dadurch gekennzeichnet, daß** das geformte Material nacheinander mit Wasserlösung des Natriumtetraborats in einer Konzentration von 8 bis 15 Gewichtsprozent, Wasserlösung des Formaldehyds in einer Konzentration von 20 bis 35 Gewichtsprozent und Wasserlösung des Natriumtetraborats in einer Konzentration von 15 bis 20 Gewichtsprozent behandelt wird.

9. Verfahren nach Anspruch 3, **dadurch gekennzeichnet, daß** das Formen durch Wälzen der Polymerkomposition bei Temperaturen von 70° bis 100° C erfolgt, bei denen eine kürzere Zeit der Auflösung im wässrigen Medium innerhalb von 24 Stunden gewährleistet wird.

10. Verfahren nach Anspruch 3, **dadurch gekennzeichnet, daß** bei der Extruderbehandlung der Polymerkomposition Temperaturen zwischen 140° bis 190° C verwendet werden, wodurch die Zeitdauer der Auflösung im wässrigen Medium in einem Zeitrahmen von 168 Stunden bis 6 Monaten geregelt wird.

## Revendications

1. Composition polymère pour la préparation de matériaux d' empaquetage à décomposition contrôlée, contenant un polyvinilalcohol et de l'eau, **caractérisée en ce qu'**elle contient une dispersion polyvinilacetate, methilcellulose, carboxymethilcellulose et glucose dans les proportions suivantes des constituants en % de masse: polyvinilalcohol 32 - 84, dispertion polyvinilacetate 10 - 57, methilcellulose 3,0-5,8, carboxymethilcellulose 2,0-4,2, glucose 0,5-2,3 et l'eau 0,5-6,0

2. Composition polymère selon la revendication 1, **caractérisée en ce que** le degré de polymerization du polyvinilalcohol est compris entre 1200 et 2000.

3. Procédé de preparation de matériaux d' empaquetage a partir d'une composition polymère à décomposition contrôlée dans un milieu aqueux, comprenant la préparation d'un mélange sec, ou d'une masse visqueuse, et la formulation dans un moule, **caractérisé en ce que** avant ou après la formulation dans le moule, le produit est traité succésivement avec une solution aqueuse de tetraborate de sodium et une solution aqueuse de formaldehyde,

4. Procédé selon la revendication 3, **caractérisé en ce que** le contenu du tetraborate de sodium dans la solution aqueuse est de 5 à 20% de masse.

5. Procédé selon la revendication 3, **caractérisé en ce que** le contenu du formaldehyde dans la solution aqueuse est de 5 à 40 % de masse.

6. Procédé selon la revendication 3, **caractérisé en ce que** la durée du traitement avec la solution est de 5 à 900 secondes.

7. Procédé selon la revendication 3, **caractérisé en ce que** après le traitement du produit avec la solution de formaldehyde il est traité de nouveau avec une solution de tetraborate de sodiume.

8. Procédé selon les revendications 3 et 7, **caractérisé en ce que** le produit formulé est traité succésivement avec une solution aqueuse de tetraborate de sodium de concentration de 8 à 15 % de masse, avec une solution aqueuse de formaldehyde de concentration de 20 à 35 % de masse, et avec une solution aqueuse de tetraborate de sodium de concentration de 15 à 20 % de masse.

9. Procédé selon la revendication 3, **caractérisé en ce que** la formulation de la composition polymère par un cylindre d'aplatissement est réalisée à une température de 70°C à 100°C, ce qui assure une période de decomposition dans un milieu aqueux plus courte jusqu'à 24 h.

10. Procédé selon la revendication 3, **caractérisé en ce que** l'extrusion de la composition polymère est réalisée à une température limitée de 140°C à 190°C, ce qui assure une durée contrôlée de decomposition dans un milieu aqueux pour une période de 168 h à 6 mois.
